(19) **Europäisches Patentamt / European Patent Office / Office européen des brevets**

(11) **EP 4 575 763 A1**

(12) **EUROPEAN PATENT APPLICATION**

(43) Date of publication:
**25.06.2025 Bulletin 2025/26**

(21) Application number: **23307359.2**

(22) Date of filing: **22.12.2023**

(51) International Patent Classification (IPC):
**G06F 8/34** *(2018.01)* **G05B 19/05** *(2006.01)*

(52) Cooperative Patent Classification (CPC):
**G06F 8/34; G05B 19/056**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Mitsubishi Electric R&D Centre Europe B.V.**
**1119 NS Schiphol Rijk Amsterdam (NL)**
Designated Contracting States:
**FR**
• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **INOUE, Hiroaki**
**35708 RENNES CÉDEX 7 (FR)**
• **COUSINEAU, Denis**
**35708 RENNES CÉDEX 7 (FR)**
• **FAISSOLE, Florian**
**35708 RENNES CÉDEX 7 (FR)**

(74) Representative: **Plasseraud IP**
**104 Rue de Richelieu**
**CS92104**
**75080 Paris Cedex 02 (FR)**

(54) **AUTOMATED SYNCHRONOUS PROGRAM GENERATION FROM TIMING DIAGRAM, APPARATUS AND CORRESPONDING COMPUTER PROGRAM**

(57) The disclosure relates to method, device, and system for generating a computer program (FCP) to execute on a programmable logic controller (PLC), the method being implemented by an electronic device. The method comprises:
- obtaining (S01), from a data structure, a timing chart (OTC) representing interaction between devices inputs (X0, X1, ...) and devices outputs (Y0, ...) of a system, the timing chart comprising a set of events (E0, E1, ...), each event of the sets of events associating at least one input value with at least one output value,
- complementing (S02) said timing chart (OTC) with at least one internal device (M1, ...) providing a complemented timing chart (CTC),
- obtaining (S03) a computer program sketch (CPS) in which some missing parts of the computer program (FCP) are introduced,
- with said computer program sketch (CPS) and said complemented timing chart (CTC), generating (S04) said computer program (FCP).

Figure 2

**Description**

<u>Domain</u>

The present disclosure relates to computer program generating methods and devices.
More specifically the disclosure relates to generating controller software from predetermined inputs and outputs that such controller software is to process.

<u>Prior Art</u>

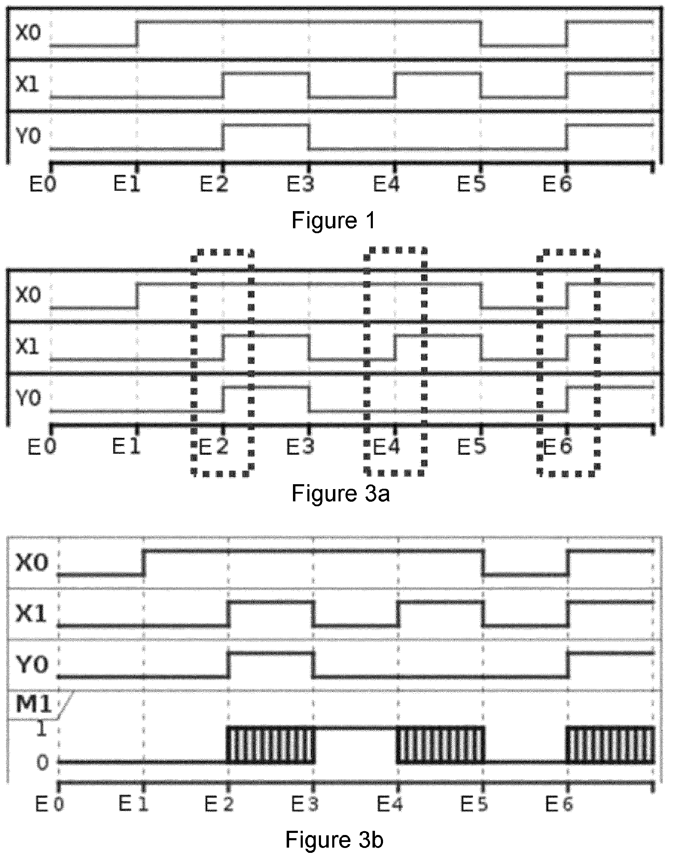

Programmable logic controllers (PLC) are industrial digital computers used as automation controllers of manufacturing processes, such as assembly lines, or robotic devices. PLCs can simulate the hard-wired relays, timers and sequencers they have replaced, via software that expresses the computation of outputs from the values of inputs and internal memory. Ladder logic is one of the programming languages used to develop PLC software. This language uses circuits diagrams of relay logic hardware to represent PLC program by a graphical diagram. Ladder logic is now standardized in IEC 61131-3 standard among other languages and is widely used and popular for technicians and electrical engineers.
In usual PLC software development processes, before programming with ladder logic (or other suitable languages), specifications of system behaviours are written. Timing chart (or timing diagram) is one of the most convenient specification description methods. Figure 1 depicts an example of a simple timing chart describing a system that takes two inputs X0 and X1 (from two devices) and emits one output Y0 (to another device). The timing chart exposes an expected behaviour of the system at six different moments in time. Timing charts consist of sequence of events, where an event means a timing when values of some devices change. In figure 1, one can note, for example, that on event 2, inputs X0 and X1 are set to true (1) and that triggers the output (Y0) to be set to true (1).
On the basis of such a timing chart, in the program development phase, programmers write PLC program which should produce the expected output as a function of the inputs. In addition, programmers need to test whether program satisfies given specifications in a system verification process. These processes have many similar or common tasks and so are cumbersome and time consuming. Indeed, while the timing chart of figure 1 is very simple, in operational conditions, timing chart used in production processes (for example in modern factories for manufacturing complex goods or apparatuses) are much more complicated to program and to test, which implies that the resources used for specifying, programming, and testing these programs are very consequent. In addition, this renders the upgrade or evolution of manufacturing process quite long and expensive which is clearly in opposition to the need of agility and adaptation.

<u>Summary</u>

The present disclosure aims to improve the situation.
To that end, it proposes a method for generating a computer program to execute on a programmable logic controller, the method being implemented by an electronic device.
The method comprises:

- obtaining, from a data structure, a timing chart representing interaction between devices inputs and devices outputs of a system, the timing chart comprising a set of events, each event of the sets of events associating at least one input value with at least one output value,
- complementing said timing chart with at least one internal device providing a complemented timing chart,
- obtaining a computer program sketch in which some missing parts of the computer program are introduced,
- with said computer program sketch and said complemented timing chart, generating said computer program.

It is thus possible to easily create some computer program based on timing chart, with less resource involvement and increased efficiency. One will note that complementing the timing chart with an internal device may not occur, specifically when no internal device is needed. In such situation, the complemented timing chart is equal to the timing chart.
According to a specific feature, the missing parts of the computer program identify the execution of the internal devices.
According to a specific feature, complementing the timing chart with the at least one internal device comprises identifying mismatched events of the timing chart where some identical input values produce different output values, and creating the at least one internal device as a function of the number of mismatched events.
According to a specific feature complementing the timing chart with the at least one internal device comprises:

- grouping events into a set of groups in which events in each group have identical input and identical previous output values,
- for each group of the set of groups, extracting output values, determining whether there exist several different output values combinations and marking these combinations in a marked data structure.
- for each group with different output values, in the marked data structure, preparing internal devices, the values of which depending, for each event of each group, on the output values according to a predetermined mapping.
- creating, the complemented timing chart, from the timing chart, optionally by inserting complemented internal devices using the predetermined mapping of values at each event.

According to a specific feature, preparing internal devices comprises, for a current group of the set of groups with different output values:

- determining the number K of different output combinations of the current group,
- creating K-1 internal devices,
- assigned a value to each of the K-1 internal devices as a function of the predetermined mapping.

According to a specific feature, creating the complemented timing chart comprises inserting the at least one internal device in the timing chart with its assigned values.
According to a specific feature, obtaining the computer program sketch comprises generating the computer program sketch as a function of the complemented timing chart.
According to a specific feature, generating the computer program sketch consists in transforming the complemented timing chart into a target language compatible with the programmable logic controller.
According to a specific feature, the target language is ladder logic and wherein the computer program sketch is a ladder sketch.
According to a specific feature, the ladder sketch comprises at least one unresolved instruction.
According to a specific feature, the at least one unresolved instruction corresponds to the manipulation of the at least one internal device.
According to a specific feature, generating the computer program comprises:

- with the complemented timing chart, obtaining one data structure representing at least one specification of the computer program, the at least one specification having the form of an expression written in racket language,
- with the computer program sketch, generating a symbolic interpreter, written in racket language, comprising at least one sketch function and at least one hole populating function,
- with the at least one specification and the symbolic interpreter, generating said computer program by executing a sketch-based program generator.

According to another aspect, the invention relates to a computer program comprising instructions causing the implementation of the method according as previously presented when such instructions are run by a processor.
A device for generating a computer program to execute on a programmable logic controller, the device comprising an interface for a timing chart representing interaction between devices inputs and devices outputs of a system, the timing chart comprising a set of events, each event of the sets of events associating at least one input value with at least one output value and at least one processor to implement the method according to the disclosure.

Drawings

More details are presented in the specification below, with reference to the appended drawings where:

- Figure 1 shows a simple example of a timing diagram,
- Figure 2 illustrates the main steps of the generation method according to the disclosure,
- Figure 3a and 3b illustrate ...
- Figure 4 illustrates the steps of the timing chart complementing method,
- Figure 5 illustrates an example of device for implementing the method according to the disclosure.

Description

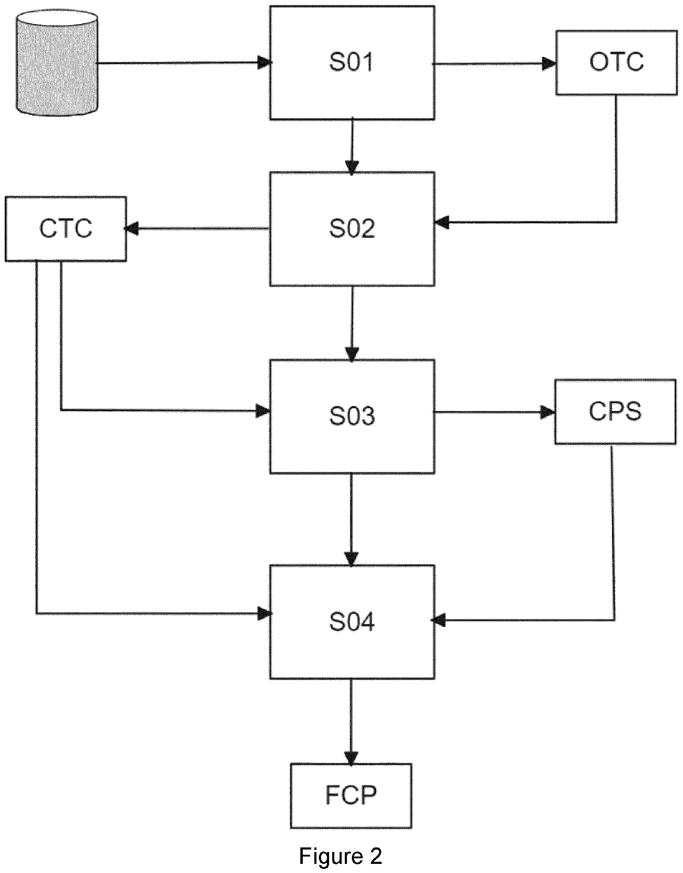

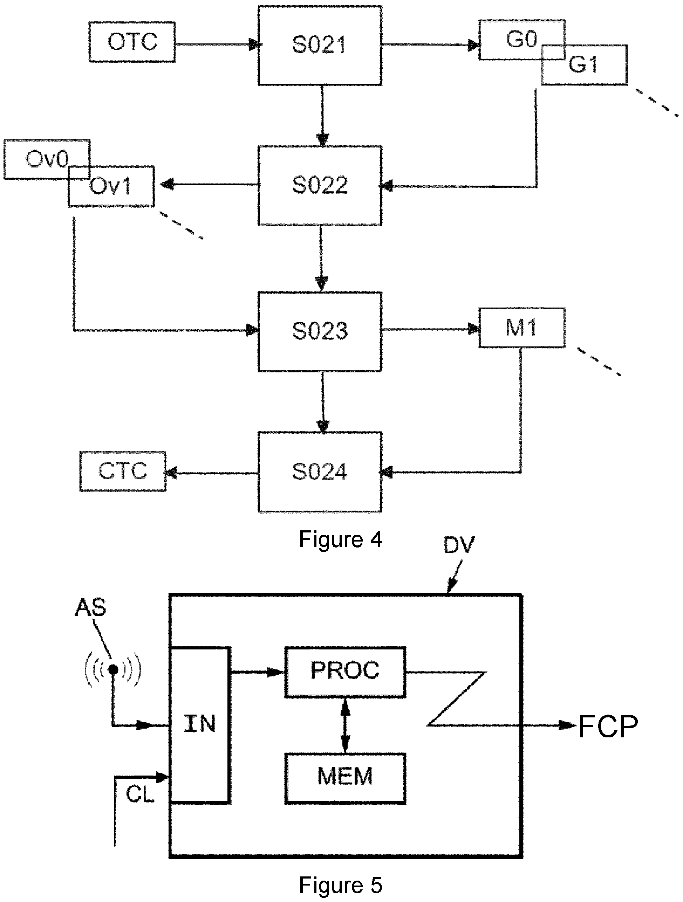

As exposed herein above, the disclosure relates to a process to generate programs from timing charts. Figure 2 illustrates the main steps of the method for generating a computer program FCP to execute on a programmable logic controller PLC, the method being implemented by an electronic device (described below in relation with figure 4). The method comprises:

- obtaining S01, from a data structure, a timing chart OTC representing interaction between devices inputs X0, X1, ... and devices outputs Y0, ... of a system, the timing chart comprising a set of events E0, E1, ..., each event associating at least one input value with at least one output value,
- complementing S02 said timing chart OTC with missing internal devices M1, ... providing a complemented timing chart CTC,
- with said complemented timing chart CTC, generating S03 a computer program sketch CPS in which some missing parts of the computer program FCP are introduced for identifying the execution of the missing internal devices M1, ...,
- with said computer program sketch CPS and said complemented timing chart CTC, generating S04 said computer program FCP.

In other words, there is described a method for generating a computer program FCP from a timing chart OTC, this method comprising firstly an identification, in the timing chart, of discordant events (i.e. events which although having identical input values, produce different output values) and secondly, once these discordant events have been identified, includes the creation of internal devices which are then used to express the variations in the discordant events and generate the computer code required to implement both the external devices (input and output devices) and the internal devices.

According to the disclosure, several components are implemented for achieving the expected results. The first one is the *"timing chart complementor component"* which is implemented in step S02, according to an embodiment. The functioning of this component is described herein below. The second one is the *"sketch generation component"*, which, using the complemented timing chart CTC, produces the computer program sketch CPS in step S03, by transforming (e.g., compiling) the complemented timing chart CTC into a target language (compatible with a programmable logic controller). The computer program sketch CPS is basically a computer program with missing parts, where the missing parts are then concretized as they satisfy the given complemented timing chart CTC. In some embodiments, computer program sketch CPS can be directly provided by a user, for example, and being partially instantiated (thus reducing the need of using the *"sketch generation component"*). In these situations, the computer program sketch CPS is then just provided to the method. Then with the complemented timing chart CTC and the computer program sketch CPS, a *"program generator component"* is implemented in step S04 for generating the computer program FCP.

The disclosure method can be implemented for generating several types of programs, in various programming languages. In the following description, an example of generation of PLC Ladder program is provided.

In consequence, the disclosure provides a robust method to generate program e.g., PLC ladder program from given timing charts. From given timing charts, the disclosure complements them with additional devices information and generate a program sketch: a program with some unknown parts. Finally, the disclosure relies on sketch-based program synthesis technique and generates an effective program. In PLC software development processes, timing charts are usually written as specifications before programming. When the method of the disclosure is used with a ladder program generating objective, the method is used to complement a timing chart with additional devices information and generate a ladder sketch with some unknown parts, that is completed by using a ladder sketch-based program synthesis technique to generate the final ladder program.

Compared to existing technologies, the features of the disclosed method have allowed completing timing charts with additional devices information and generating a sketch from completed timing charts in an efficient and robust manner. An example with ladder programs is provided.

Hence, the method of the disclosure helped mitigating the existing problem of huge resources implied in PLC project management. Indeed, this method helped reducing PLC programming efforts because in usual PLC software development process, specifications such as timing charts are written at first. Then, PLC program is written for satisfying timing charts, which implies a certain subjectivity. Since this disclosure allows generating PLC program from timing charts, it renders the PLC program development processes more efficient with less subjectivity involved.

The disclosure also allows reducing verification efforts, because thanks to sketch-based programming, it can generate a program which satisfies given specifications (a.k.a., correct-by-construction). This implied that programmers or verifiers didn't need to test it again or at least needed lasting less time and effort in verification.

In addition, compared to existing Sketch-based synthesis approach, the disclosure exposes a novel technology to generate program sketch automatically from timing charts. Finally, compared to existing Automata Learning approaches, which generates automata from given sequences of events, the disclosure generates concrete program which is more readable than automata-

Therefore, the proposed method enhanced efficiency of the PLC program development process while reducing resource and time consumption.

In the following paragraphs a specific example of the method is described for PLC ladder generation. The one skilled in the art, however, will easily understand that the proposed technique is not limited to ladder generation, and can be easily customized so as to generate other forms of program, for example Function Block Diagram, Sequential Function Charts, Structured Text, or Instruction List.

In this example, the ladder program which is generated using a Sketch-based synthesis technique (for the step of generating S04 the computer program FCP). For understanding purposes only, explanations of sketch-based synthesis technique are given. Sketch-based synthesis technique uses program sketch which means a program with some unknown parts (called holes). The technology takes program sketch and specifications as inputs and emits a concrete program which concretizes unknown parts as it satisfies given specifications. In the context of the disclosure, the inventors decided to use Rosette. Below is an example of program sketch, where (??) means unknown parts holes. The programming language used in this example is a virtual one similar to ML.

```
function sketch(x) = (x + (??)) * (x + (??))
```

Then, here is a specification which the program sketch should satisfy. The specification is written in the form of First-Order Logic. This means that the result of the sketch function should be same as the computation result of $x*x + 2*x + 1$.

```
forall x. sketch(x) = x*x + 2*x + 1
```

Finally, by using Sketch-based synthesis technique, concrete program is generated.

```
function sketch(x) = (x + 1) * (x + 1).
```

The inventors decided to use, in at least one embodiment, these principles for generating the computer program FCP. Thus, based on the complemented timing chart and on the basis of the computer program sketch, the above principles are used to create the computer program FCP.

In consequence, with respect to the previously exposed method, the disclosure comprises a timing chart complementing step S02, which is language independent, and in which as indicated herein above, allows generating internal devices (variable), which are missing, and which are likely to add unknown internal states corresponding to the inputted timing chart state variation with respect to the outputs. This complementing step is done by the timing chart complementor component, and it implements a complemented method which is described herein below, in relation with figures 3a and 3b, for explanation purposes only, in which an example of the situation in which the complementor component has been used is illustrated.

This component complements given timing charts with possible values of additional devices.

Generally, PLC has input devices (X0, ..., Xn), output devices (Yn) and internal devices (Mn). PLC program execution is done cyclically. Roughly, in each cycle, PLC (a) refreshes values of input devices using external information such as sensors and, (b) computes values of output and internal devices using those values of previous cycle and (c) update output and internal devices.

On the other hand, in timing charts, programmers express only values of input and output devices. It lacks values of internal devices. If same input values result in different output values in some parts of a timing chart, there should be some internal devices which embody states of program. Therefore, the component complements this kind of information. In figure 3a, a timing chart with two input values X0 and X1 and one output value Y0 is presented. In this example, seven events (including the initial event of the number 0) are presented. In event E2 and E6, values of X0 and X1 are true and the previous value of Y0 is false and Y0 becomes true. In another event E4, similarly, values of X0 and X1 are true and the previous value of Y0 is false. However, Y0 doesn't become true in the event E4. If program does not have any internal devices, program execution with same input and previous output values must result in same output. Therefore, this means that there should be some internal devices (state) which differentiate event E2 (and event E6 similarly) from event E4. The component complements such kind of (unknown) internal devices and provides the complemented timing chart CTC.

Figure 3b illustrates the result of the execution of the complementor component. One can note that the complemented timing chart is updated (compared to the original timing chart) by the addition of an internal device M1. In the events E2 and E6, the previous value of M1 will be false; on the contrary, in the event E4, the previous value of M1 will be true. In such case, one can easily differentiate events E2 and 6 from event E4. Striped patterns are unknown parts, so, M1 value can either be false or true. Since the purpose is to differentiate events E2 and E6 from event E4, concretization of these parts is not needed at this time.

Hence, one aspect of the disclosure relates to the way the timing chart OTC is complemented. In an embodiment, the complementor component process the following method, described in relation with figure 4:

- grouping S021 events into groups (G0, G1, ...) in which events in same group have same input and same *previous* output values. Note that in this grouping step, the previous values of the outputs are considered. As a result, one gets a list of lists of events.

In example of figure 3a, this grouping step provides four groups (lists) of events: ((0,5), (1), (2,4,6), (3)): events E0 and E5 are in the same group since inputs X0, X1 are equal to false so does previous output; events E2, E4 and E6 are also in the same group since inputs X0, X1 are equal to true, so does previous output (for which value is false).

- for each group (G0, G1, ...), extracting S022 output values (Ov0, Ov1, ...) and check whether there exist several different output values combinations. In the event such combinations exist, they are marked up in a marked data structure.

In the above example, one will obtain the following data structure ((), (), ((true), (false)), ()) since event E4 has false value and events E2 and E6 have true value.

- for each group with different output values, in the marked data structure, preparing S023 internal devices. More specifically when K different output combinations are present, K-1 internal devices (M1, ...) are prepared. A mapping from values of output devices to values of internal devices are also given.

In the example of figure 3a, one internal device M1 is added since there exist two different output values. The mapping of values is as follows: the value false of Y0 correspond to the value true of M1 and the value true of Y0 corresponds to the value false of M1.

- Creating S024 timing chart for complemented internal devices using the mapping. In this whole process, the number of events will not be changed. So, values of internal devices should not be changed between two consecutive events.

In the example of figure 3a, in the events E2 and E6, the previous value of M1 should be false, so the value of M1 between events E1 and E2 (or E5 and E6) should be false. Similarly, the value of M1 between events E3 and E4 should be true. The initial value of internal devices will be false, so the value of M1 between events E0 and E1 will be false. For other parts, since they are not needed to be restricted, unknow parts (striped pattern) remain.

In an embodiment, the complemented timing chart (CTC) is then stored in a complemented data structure. According to an example of implementation, the timing chart could be stored in a text file in which each line corresponds to a timing chart event. Each column corresponds either to an input or an output. In the example of the timing chart of figure 1 described above, the file comprises for example seven lines, corresponding to the seven timing chart events. Each line comprises three columns; two columns represent the inputs (X0, X1) and one column represents the output (Y0). The process implemented by the complementor component, in this implementation example, thus creates a new column, corresponding to the internal device M1, which is used to vary the internal state (unknown). One can note that this example is purely illustrative since it is also understandable that in such a text file, each line could correspond to an input or an output and each column to an event. In this case, the complementor component would add a new line corresponding to internal device M1. Other suitable storage format for this timing chart could also be envisioned, like XML files or the like, in which each event would be a node of the XML data structure.

The complemented data structure (which comprises the complemented timing chart (CTC)) is then used to generate ladder sketch (LSK), by implementing a ladder sketch generator component. The ladder sketch LSK which is generated is a specific version of the program sketch PS disclosed above, i.e., a sketch under ladder logic. As explained above, this component is a compiler that transforms timing charts. In this embodiment, the component transforms the timing charts into programs according to ladder logic. According to the disclosure, this component is further distinguished by the fact that it identifies the missing operations of the timing chart and therefore performs a generation of a program according to ladder logic with portions of missing information. For example, in the situation shown in Figures 3a and 3b, the generation component compiles the completed timing chart (obtained from step S01) by identifying the instructions missing from the internal device M1. The illustration is that the compiler positions the missing parts of the ladder at the level of the hatched (stripped) parts in figure 3b.

The important point is that it should contain instructions which can manipulate devices appeared at timing charts. In the example of figure 3a and 3b, both Y0 and M1 will be set to true from false and vice versa. So, a manner of doing so is, for the ladder sketch generator component, to prepare SET and RST instructions for Y0 and M1 (SET/RST are instructions to substitute true/false for the given device). And, in this example 1, all front parts are set to holes (??), as expected for the Sketch-based Program Synthesis phase:

```
(??)--------[RST M1]
(??)--------[SET Y0]
(??)--------[SET M1]
(??)--------[RST Y0]
```

Another possible implementation, in the following example 2, is to consider another variation which uses only OUT instruction (OUT instruction always reflects the result of the front part to the given device):

```
(??)--------[OUT M1]
(??)--------[OUT Y0]
```

Another possible implementation of completion is to use contents of databases which are processed by machine learning algorithms to generate sketch programs. More specifically, these databases comprise logs of former execution of PLC program. These logs are transformed into timing charts, which are then used to learn sketch generation on the basis of former executions.

As explained herein before, once the ladder sketch program and the complemented timing charts are obtained, both are provided to the ladder program generator component to generate the ladder program. In this embodiment, the ladder program generator component comprises three main components:

- a specification generation component which generates a data structure comprising specifications, using the complemented timing chart;
- a symbolic interpreter generation component which generates a data structure comprising a symbolic interpreter, this component using the ladder sketch program generated by the ladder sketch generation component.

In this embodiment, the data structure comprising specifications and the data structure comprising the symbolic interpreter are used by the sketch-based program generator component. This sketch-based program generator component generates the ladder program. According to a specific embodiment, the ladder program generator component uses Rosette technologies.

In this specific embodiment, the specification generator component converts the complemented timing chart into a specification written in *"First Order Logic"*. More specifically, each event of the complemented timing chart is converted into one FOL formula. In addition, each inter-event (meaning scan executions between two events) will be converted into one FOL formula if it does not contradict with existing FOL formulas from events.

For example, turning back to figure 3a and 3b, inter-event E4~E5 will contradict with event E2 because they have same inputs and last-output values but the value of M1 remains unknown in the inter-event.

Here is an example of a part specifications generated by the specification generator component.

```
forall x0, x1, y0, m1.
let (y0', m1') = sketch(x0, x1, y0, m1) in ((!x0 & !x1 & !y0 & !m1) => ( !y0' & !m1 ')) &      // inter-event E0~E1
((x0 & !x1 & !y0 & !m1) => ( !y0' & !m1 ')) &                                                     // event E1
((x0 & !x1 & !y0 & !m1) => ( !y0' & !m1 ')) &                                                     // inter-event E1~E2
((x0 & x1 & !y0 & !m1) => y0') &                                                                  // event E2
((x0 & x1 & y0) => y0')) &                                                                        // inter-event E2~E3
((x0 & !x1 & y0) => ( !y0' & m1')) & ...                                                          // event E3
```

This specification extract (not all events and inter-events are reproduced) is in the form of FOL which "sketch" function should satisfy so that the entire formula becomes true. The first line "forall x0, x1, y0, m1." is universal quantifier with Boolean variables, and then, the FOL formula that these variables should obey is introduced. The "sketch" function is a representation of the above ladder sketch, as described herein after. The second line means variables binding. Here, the two output of sketch function is bound to new variables y0' and m0'. After "let"~"in", each line describes a FOL formula generated from events and inter-events, which inputs (x0, x1, y0, m0) and outputs (y0', m0') should obey, using logical not (!), logical and (&) and logical implication (=>).

In other words, from the complemented timing chart, a transformation of all the events and inter-events is carried out using at least one filling function (the "sketch" function) to which the known inputs are supplied and to which the known outputs are also assigned. For example, for the E0 to E1 event in Figure 3b, the inputs for X0, X1, Y0 and M1 are FALSE, and the transition also produces FALSE for Y0 and M1. Unknown parts of timing charts appeared in complemented internal devices (i.e. M1 in example of figure 3b) are not specified directly.

On its side, the symbolic interpreter generator component converts the ladder sketch (provided by the sketch generation component) into an interpreter (which is then implemented by the underlying sketch-based synthesis component (such as Rosette)).

In other words, it generates the implementation of the "sketch" function which has been used in the specification (by the specification generation component). For example, the ladder sketch based on SET/RST instructions (example 1, presented above) is translated into the following code:

```
function rst(cond, dev) = if cond then false else dev

function set(cond, dev) = if cond then true else dev

function sketch(x0, x1, last_y0, last_m1) =

    let m1_0 = rst((??), last_m1) in

    let y0_0 = set((??), last_y0) in


    let m1_1 = set((??), m1_0) in

    let y0_1 = rst((??), y0_0) in

    (y0_1, m1_1)
```

The "set" and "rst" functions are implementation of SET/RST instructions. The first argument corresponds to "front parts" in ladder, and the second argument is "target" device. In this example, the sketch function takes 4 arguments: values of inputs X0 and X1, the last values of output Y0 and internal device M0. One uses static single assignment form to express the semantics of ladder program, defining new variables (using "let") for each result of executing instruction and using it for the later parts of the program.

In the above part of symbolic interpreter, holes (??) remain as they are. Next steps consist in providing the necessary means which allows to complete (concretize) these holes, by providing a program search space (which allows completing these holes).

According to an interesting feature of the disclosure, the definition of the program search space is cleverly optimized. Indeed, in the context of a PLC setting, program search space is Boolean formulas using given devices. One defines "hole" function representing program search space, like as grammar definition of programming languages. NOT, AND and OR represent logical operators and "|" means a non-deterministic choice. Such a hole function is also a part of symbolic interpreter generated from given ladder sketch. On this basis, the "hole" and "dev" functions could be:

```
function hole()  =
| dev()
| NOT dev()
| hole()  AND hole()
| hole()  OR hole()

function dev() =
| x0 | x1 | y0 | m1
```

Here, the definition is of course simplified for the need of the explanation. In each hole, static single assignment transformation is also taken into account (e.g., using m1_0 until m1_1 is defined). In the case one wants to improve the performance of program synthesis the implementation could become more complicated.

Finally, the sketch-based program generator component uses the data structure comprising specifications and the data structure comprising the symbolic interpreter for generating the ladder program. In an embodiment, Rosette is used for synthetising the ladder program. Thanks to this technique, the ladder program is quickly and efficiently generated with no need of any human intervention.

As shown in figure 4, the device DV for generating a computer program (FCP) to execute on a programmable logic controller (PLC), as presented above, can comprises an antenna system AS, for example coupled through an interface IN to a processing circuit including a processor PROC and a memory MEM. Alternatively, or in complement, or as a variant, of the antenna system AS, necessary data (e.g., a timing chart OTC, predetermined parameters) can also be received thru a communication link CL allowing the device to generate the computer program (FCP). The memory stores at least instructions of a computer program according to the present disclosure. By carrying out this type of processing, and in particular by implementing the data structures (complemented timing chart, program sketch,) according to the method of the disclosure, the device's processor has proven to be able to generate the computer program (FCP) in the various possible sequences in the search space, in a short period of time. Such an effect is obviously not possible by attempting to calculate or obtain these action sequences manually or mentally, as this would be resource-consuming, as explained herein above.

In preferred embodiments, the computer system or device comprises one or more processors (which may belong to a same computer or to different computers) and one or more memories (magnetic hard disk, optical disk, electronic memory, or any computer readable storage medium) in which a computer program product is stored, in the form of a set of program-code instructions to be executed in order to implement all or part of the steps of the generating method. Alternatively, or in combination thereof, the computer system can comprise one or more programmable logic circuits (FPGA, PLD, etc.), and/or one or more specialized integrated circuits (ASIC), etc., adapted for implementing all or part of said steps of the generating method. In other words, the computer system comprises a set of means configured by software (specific computer program product) and/or by hardware (processor, FPGA, PLD, ASIC, etc.) to implement the steps of the generating method.

**Claims**

1. A method for generating a computer program (FCP) to execute on a programmable logic controller (PLC), the method being implemented by an electronic device, the method comprising:

   - obtaining (S01), from a data structure, a timing chart (OTC) representing interaction between devices inputs (X0, X1, ...) and devices outputs (Y0, ...) of a system, the timing chart comprising a set of events (E0, E1, ...), each event of the sets of events associating at least one input value with at least one output value,
   - complementing (S02) said timing chart (OTC) with at least one internal device (M1, ...) providing a complemented timing chart (CTC),
   - obtaining (S03) a computer program sketch (CPS) in which some missing parts of the computer program (FCP) are introduced,
   - with said computer program sketch (CPS) and said complemented timing chart (CTC), generating (S04) said computer program (FCP).

2. The method according to claim 1, wherein the missing parts of the computer program (FCP) identify the execution of the internal devices (M1,...).

3. The method according to claim 2, wherein complementing (S02) the timing chart (OTC) with the at least one internal device (M1, ...) comprises identifying mismatched events of the timing chart (OTC) where some identical input values produce different output values, and creating the at least one internal device (M1, ...) as a function of the number of mismatched events.

4. The method according to any of claim 1 to 3, wherein complementing (S02) the timing chart (OTC) with the at least one internal device (M1, ...) comprises:

   - grouping (S021) events into a set of groups (G0, G1, ...) in which events in each group have identical input and identical previous output values,
   - for each group (G0, G1, ...) of the set of groups, extracting (S022) output values (Ov0, Ov1, ...), determining whether there exist several different output values combinations and marking these combinations in a marked data structure.
   - for each group with different output values, in the marked data structure, preparing (S023) internal devices, the values of which depending, for each event of each group, on the output values according to a predetermined mapping.
   - creating (S024), the complemented timing chart (CTC), from the timing chart (OTC), optionally by inserting complemented internal devices using the predetermined mapping of values at each event.

5. The method according to claim 4, wherein preparing (S023) internal devices comprises, for a current group of the set of groups with different output values:

   - determining the number K of different output combinations of the current group,
   - creating K-1 internal devices (M1, ...),
   - assigned a value to each of the K-1 internal devices as a function of the predetermined mapping.

6. The method according to claim 4, wherein creating (S024) the complemented timing chart (CTC) comprises inserting the at least one internal device (M1, ...) in the timing chart (OTC) with its assigned values.

7. The method according to claim 1 to 6, wherein obtaining (S03) the computer program sketch (CPS) comprises generating (S03) the computer program sketch (CPS) as a function of the complemented timing chart (CTC).

8. The method according to any of claim 7, wherein generating (S03) the computer program sketch (CPS) consists in transforming the complemented timing chart (CTC) into a target language compatible with the programmable logic controller.

9. The method according to claim 8, wherein the target language is ladder logic and wherein the computer program sketch (CPS) is a ladder sketch.

10. The method according to claim 9 wherein the ladder sketch comprises at least one unresolved instruction.

11. The method according to claim 10 wherein the at least one unresolved instruction corresponds to the manipulation of the at least one internal device (M1,...).

12. The method according to any of claim 1 to 11, wherein generating (S04) the computer program (FCP) comprises:

    - with the complemented timing chart (CTC), obtaining one data structure representing at least one specification (SCP) of the computer program (FCP), the at least one specification having the form of an expression written in racket language,
    - with the computer program sketch (CPS), generating a symbolic interpreter (SI), written in racket language, comprising at least one sketch function and at least one hole populating function,
    - with the at least one specification (SCP) and the symbolic interpreter (SI), generating said computer program (FCP) by executing a sketch-based program generator.

13. A computer program comprising instructions causing the implementation of the method according to anyone of the preceding claims when such instructions are run by a processor.

14. A device for generating a computer program to execute on a programmable logic controller, the device comprising an interface for a timing chart representing interaction between devices inputs and devices outputs of a system, the timing chart comprising a set of events, each event of the sets of events associating at least one input value with at least one output value and at least one processor to implement the method according to anyone of claims 1 to 12.

Figure 1

Figure 3a

Figure 3b

Figure 2

Figure 4

Figure 5

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/254653 A1 (EICHHORN ANNETTE [DE] ET AL) 16 December 2004 (2004-12-16) <br> * claim 1 * <br> * paragraphs [0019], [0020], [0023] * <br> ----- | 1-14 | INV. <br> G06F8/34 <br> G05B19/05 |
| A | US 2004/032412 A1 (ODOM BRIAN KEITH [US]) 19 February 2004 (2004-02-19) <br> * abstract; claim 1 * <br> * paragraph [0088] - paragraph [0095] * <br> ----- | 1-14 | |
| A | JP 2008 020956 A (KANAGAWA PREFECTURE; NAT UNIV YOKOHAMA ET AL.) 31 January 2008 (2008-01-31) <br> * abstract; claim 1 * <br> ----- | 1-14 | |

TECHNICAL FIELDS
SEARCHED        (IPC)

G06F
G05B

The present search report has been drawn up for all claims

| Place of search | Date of completion of the search | Examiner |
|---|---|---|
| Munich | 14 May 2024 | Hoareau, Samuel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.**                    EP 23 30 7359

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2024

| Patent document cited in search report | | Publication date | Patent family member(s) | | Publication date |
|---|---|---|---|---|---|
| US 2004254653 | A1 | 16-12-2004 | AT | E303620 T1 | 15-09-2005 |
| | | | DE | 10147166 A1 | 24-04-2003 |
| | | | EP | 1430370 A1 | 23-06-2004 |
| | | | ES | 2248611 T3 | 16-03-2006 |
| | | | US | 2004254653 A1 | 16-12-2004 |
| | | | WO | 03027782 A1 | 03-04-2003 |
| US 2004032412 | A1 | 19-02-2004 | NONE | | |
| JP 2008020956 | A | 31-01-2008 | JP | 4922684 B2 | 25-04-2012 |
| | | | JP | 2008020956 A | 31-01-2008 |

EPO FORM P0459

For more details about this annex : see Official Journal of the European Patent Office, No. 12/82